# EUROPÄISCHE PATENTSCHRIFT

(11) **EP 1 167 202 B1**
(45) Veröffentlichungstag und Bekanntmachung des Hinweises auf die Patenterteilung: **10.03.2004**
(21) Anmeldenummer: 01115117.2
(22) Anmeldetag: 21.06.2001
(51) Int. Cl.: B65B 21/18, B08B 3/12, B65G 45/22

(54) **Reinigungsvorrichtung für Greifer von Packmaschinen**
Device for cleaning grippers for packaging machines
Dispositif pour nettoyer les organes de préhension pour les machines d'emballage

(30) Priorität: 29.06.2000 DE 10031634
(43) Veröffentlichungstag der Anmeldung: 02.01.2002
(73) Patentinhaber: GripTec Technische Produkte GmbH, 83075 Bad Feilnbach (DE)
(72) Erfinder: Hanusch, Hans, 83088 Kiefersfelden (DE)
(74) Vertreter: Bauer, Friedrich, Dipl.-Ing.

(56) Entgegenhaltungen:
- DE-U- 9 016 421
- US-A- 5 112 181
- US-A- 5 813 074

## Beschreibung

Die Erfindung betrifft eine Reinigungsvorrichtung für Greifer von Packmaschinen sowie ein Verfahren zur Reinigung derartiger Greifer.

Für das maschinelle Ergreifen und Umsetzen von Gegenständen wie Flaschen und anderen Behältern, insbesondere Flüssigkeitsbehältern, kommen Packmaschinen mit Greiferköpfen zum Einsatz, an denen meist eine Mehrzahl von Greifern befestigt sind. Die Greifer weisen beispielsweise mit Druckluft beaufschlagbare elastische Greifereinsätze oder druckluftbetätigte Greiferbacken oder Greiffinger auf. Denkbar sind auch mechanische oder insbesondere elektrisch wirkende Greifer.

Wenn beispielsweise Bierflaschen in Trägern eingesetzt bzw. aus Trägern entnommen werden sollen, weist der entsprechende Greiferkopf beispielsweise 20 Greifer auf, die in einer 5 x 4 Matrix angeordnet sein können. Die Greifer werden für das Ergreifen der Flaschen auf die Flaschenhälse abgesenkt, so dass die Flaschenhälse gegriffen werden können. Alle Flaschen eines Gebindes lassen sich auf diese Weise gleichzeitig hochheben, absetzen und ablegen.

Bei den genannten Greifköpfen tritt das Problem auf, dass die Greifer und insbesondere auch die innenliegenden elastischen Greifereinsätze, Greiferbacken oder Greiffinger während der Benutzung aufgrund des Kontaktes zu den zahlreichen transportierten Gegenständen verschmutzen. Diese Verschmutzungen können zu hygienischen und optischen Problemen an den umzusetzenden Gegenständen führen. Bei einer starken Verschmutzung kann auch die sichere Halterung der Gegenstände in den Greifern sowie die ordnungsgemäße Komprimierung der Greifereinsätze bzw. die Rückstellung der Greiferbacken/Greiffinger beeinträchtigt werden. Aus diesen Gründen müssen die Greifer und insbesondere die elastischen Greifeinsätze bzw. Greiferbacken/Greiffinger von Zeit zu Zeit gereinigt werden.

Die Reinigung der Greifer wird gemäß einem bekannten Verfahren von Hand durchgeführt, wobei improvisierte Hilfsmittel wie Akkuschrauber zum Einsatz kommen, in den eine zugeschnittene Bürste eingesetzt wird. Eine derartige Reinigung ist zeit- und arbeitsaufwendig, personalintensiv und verursacht lange Stillstandszeiten der Packmaschine, was die Produktionskosten beträchtlich erhöht. Insbesondere wird überdurchschnittlich Wasser bzw. Reinigungsmittel verbraucht, was auch aus Umweltgesichtspunkten problematisch ist.

Dokument US-A-5 813 074 beschreibt eine Reinigungsvorrichtung mit den Merkmalen des Oberbegriffs des Anspruchs 1.

Vor diesem Hintergrund liegt der Erfindung die Aufgabe zugrunde, eine Vorrichtung und ein Verfahren zur Reinigung von Greifern einer Packmaschine zu schaffen, welche bzw. welches eine schnelle, einfache und gründliche, hygienisch einwandfreie Reinigung mit möglichst wenig Verbrauch von Wasser bzw. Reinigungsmitteln ermöglicht.

Diese Aufgabe wird erfindungsgemäß durch eine Reinigungsvorrichtung mit den Merkmalen des Anspruches 1 bzw. durch ein Verfahren zur Reinigung von Greifern mit den Merkmalen des Anspruches 9 gelöst. Vorteilhafte Ausführungsformen der Erfindung sind in den weiteren Ansprüchen beschrieben.

Die erfindungsgemäße Reinigungsvorrichtung enthält eine mit Flüssigkeit befüllbare Wanne, in welche die an einem Greiferkopf befestigten Greifer eingetaucht werden können, eine in der Wanne angeordnete Düseneinrichtung zum Benetzen der Oberflächen der Greifer mit der Flüssigkeit, sowie mindestens eine in der Wanne angeordnete Ultraschallquelle zum Reinigen der Greifer mittels Ultraschall.

Mit der erfindungsgemäßen Reinigungsvorrichtung ist es möglich, die Greifer von Packmaschinen schnell und gründlich zu reinigen. Die Greifer werden in die Reinigungsflüssigkeit der Wanne eingetaucht und hierdurch in den benetzten Bereichen gereinigt. Durch die Anströmung mit der Reinigungsflüssigkeit wird bereits ein erstes mechanisches Ablösen von Schmutz bewirkt. Insbesondere wird aber auch das in den glocken- bzw. tulpenförmigen Hohlräumen eventuell gefangene Gas durch die über die Düseneinrichtung eingeleitete Flüssigkeit verdrängt, so dass auch und gerade diese umgestülpten Hohlräume gründlich gesäubert werden. Die eingebaute Ultraschallquelle bewirkt dabei auch eine Ablösung von fest anhaftenden Schmutzpartikeln. Das Bestrahlungsfeld der Ultraschallquelle ist dabei vorzugsweise so, dass es alle in die Wanne eingetauchten Greifer erfasst und somit gleichzeitig bearbeiten kann. Alternativ können auch mehrere Ultraschallquellen vorgesehen sein, die so angeordnet sind, dass jeder eingetauchte Greifer im Schallfeld mindestens einer Ultraschallquelle liegt. Vorzugsweise wird die gesamte Wannenfläche beschallt.

Die Verwendung der erfindungsgemäßen Reinigungsvorrichtung erfordert keine aufwendigen manuellen Tätigkeiten mehr, da für die Durchführung der Reinigung die Greifer lediglich in die Wanne eingetaucht und nach Abschluss der Reinigung hieraus wieder herausgezogen werden müssen. Insgesamt wird somit eine schnellere, gründlichere, d.h. wesentlich effektivere und umweltschonende Reinigung der Greifer von Packmaschinen ermöglicht.

Vorteilhafterweise ist die Wanne der Reinigungsvorrichtung derart dimensioniert, dass alle Greifer mindestens eines Greiferkopfes der Packmaschine gleichzeitig in die Wanne eingetaucht werden können. Die Reinigung eines kompletten Kopfes mit allen Greifern erfordert somit nur ein einmaliges Eintauchen und Herausziehen. Hierdurch kann die Zeit für den Reinigungsvorgang erheblich verkürzt werden.

Gemäß einer vorteilhaften Ausführungsform umfasst die Düseneinrichtung mehrere Düsen, die matrixartig oder in einem der Anordnung der zu reinigenden Greifer entsprechenden Raster angeordnet sind. In diesem Fall ist es auf besonders wirkungsvolle Weise möglich, mehrere Greifer gleichzeitig in der Wanne zu reinigen.

Vorzugsweise ist darauf zu achten, dass die gesamte Fläche der Wanne mit Düsen bestrahlt wird, so dass auch unterschiedliche Greiferanordnungen, z. B. 6x4, 3x4 ode 4x5-Anordnungen, mit derselben Reinigungsvorrichtung gereinigt werden können. Die Reinigung der eingetauchten Greifer kann dann gleichzeitig auf besonders effektive Weise erfolgen, da alle Greifer gleichzeitig durch zumindest einen Düsenstrahl zielgerecht angeströmt werden können.

Nach einer anderen Weiterentwicklung der Erfindung ist die Ansaugung der Druckzuleitung für die Düseneinrichtung in der Wanne angeordnet. Über die Ansaugung wird der Druckzuleitung und damit der Düseneinrichtung Flüssigkeit zugeführt. Wenn diese Ansaugung in der vorgeschlagenen Weise in der Wanne angeordnet wird, wird die Flüssigkeit in der Wanne in einem Kreislauf durch die Düseneinrichtung gepumpt. Es ist somit nicht erforderlich, durch die Düseneinrichtung ständig frische Flüssigkeit zuzuführen, sondern die Wanne kann vielmehr mit einer Charge solcher Flüssigkeit gefüllt werden. Wenn diese Charge verbraucht ist, d.h. über eine vorgegebene Schwelle mit Schmutz angereichert ist, kann sie ersetzt oder gereinigt werden. Eine Kreislaufführung der Flüssigkeit hat neben dem sparsamen Verbrauch ferner den Vorteil, dass keine aufwendigen Zuleitungen für Flüssigkeit zur Reinigungsvorrichtung geführt werden müssen.

Bei einem ständig hohen Verschmutzungsgrad wird nach jedem oder nach gewissen Interwallen Frischwasser zugeführt. Das verschmutzte Brauchwasser wird entweder abgepumpt oder durch einen Ablauf oder Überlauf entfernt.

Die erfindungsgemäße Reinigungsvorrichtung kann auf einer höhenverstellbaren, vorzugsweise auch seitenverstellbaren, Halterung angeordnet sein. Die Höhenverstellbarkeit erlaubt es, ortsfest positionierte Greifer in die Flüssigkeit der Wanne einzutauchen, indem die Wanne von einer Position unterhalb der Greifer nach oben verfahren wird. Eine zusätzliche Seitenverstellbarkeit der Halterung ermöglicht es darüber hinaus, die Wanne aus seitlichen Positionen an den gewünschten Einsatzort zu fahren bzw. sie bei Nichtgebrauch aus dem Wege zu räumen.

Vorzugsweise ist die Reinigungsvorrichtung mit einer Steuerung für die Düseneinrichtung versehen, welche so eingerichtet ist, dass sie die Ausführung eines automatischen Reinigungsprozesses ermöglicht. Falls die entsprechenden Elemente vorhanden sind, kann die Steuerung auch die Ultraschallquelle und die Positionierung der Halterung der Reinigungsvorrichtung steuern. Eine solche Steuerung erlaubt demnach, den Reinigungsvorgang vollautomatisch, d.h. "auf Knopfdruck" eines Bedieners ausführen zu lassen. Dabei kann ausgenutzt werden, dass der Einsatz der Reinigungsvorrichtung in der Regel in fest strukturierten industriellen Produktionslinien erfolgt, in welchen stets gleiche Positionen anzufahren und gleiche Verfahrensparameter einzuhalten sind. Gegebenenfalls kann die Steuerung auch zu einer Regelung erweitert sein und Rückkopplungselemente enthalten, welche eine Überwachung der Positionierung und/oder des Reinigungserfolges erlauben.

Weiterhin ist die gesamte Steuerung der Reinigungsvorrichtung vorzugsweise an die Steuerung der Packmaschine, welche die zu reinigenden Greifer enthält, gekoppelt. Auf diese Weise wird es ermöglicht, den Reinigungsprozess voll automatisch von der Packmaschine selbst aufrufen zu lassen, wenn diese z.B. einen Arbeitszyklus beendet oder eine vorgegebene Anzahl von Arbeitsschritten geleistet hat und wenn sie die Verschmutzung ihrer Greifer über Sensoren detektiert. Weiterhin kann durch eine solche Kopplung der Steuerungen sichergestellt werden, dass sich die Greifer der Packmaschine an der richtigen Position für eine Reinigung befinden und dort während des Reinigungsprozesses verbleiben.

Die Erfindung betrifft ferner ein Verfahren zur Reinigung von Greifern einer Packmaschine, welches dadurch gekennzeichnet ist, dass die Greifer in eine Flüssigkeit eingetaucht, unter Verdrängung gegebenenfalls vorhandener Gasblasen mit Flüssigkeit angeströmt und mit Ultraschall bestrahlt werden. Das Eintauchen der Greifer führt dazu, dass diese mit der Flüssigkeit benetzt werden. Das Anströmen mit Flüssigkeit führt zu einer mechanischen Ablösung von Schmutz auf der Oberfläche der Greifer und befreit insbesondere auch gasbefüllte Hohlräume der Greifer von Gas. Somit wird die gesamte Oberfläche der Greifer, soweit sie in die Flüssigkeit eingetaucht sind, und insbesondere auch die innere Oberfläche der Greifer, mit Flüssigkeit benetzt und gesäubert, wobei die Reinigung wiederum zusätzlich durch Ultraschall unterstützt wird.

Nachfolgend wird die Erfindung anhand der Zeichnung beispielshaft näher erläutert. In dieser zeigen:
- Figur 1 :: eine schematische Darstellung einer ersten Ausführungsform der Erfindung, und
- Figur 2 :: eine schematische Darstellung einer zweiten Ausführungsform der Erfindung.

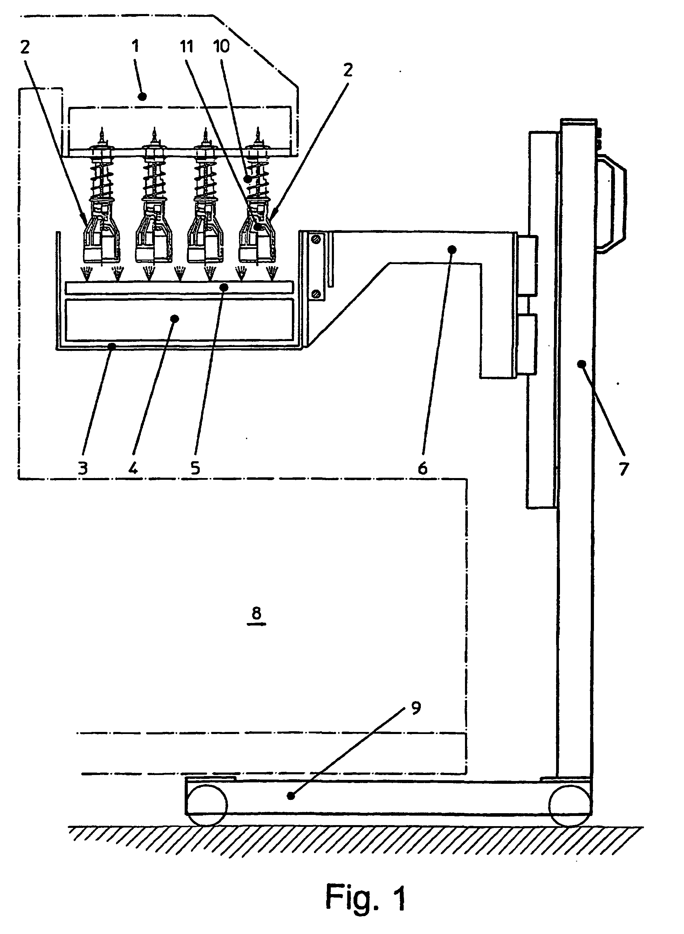

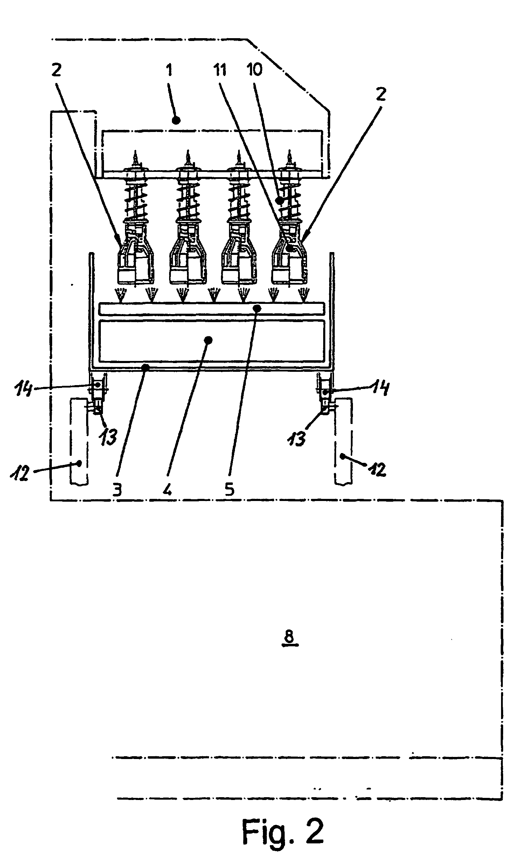

Die Reinigungsvorrichtung gemäß den Figuren 1 und 2 dient dazu, Greifer 2 eines Greiferkopfes 1 einer Packmaschine 8 von anhaftendem Schmutz zu säubern. Die Packmaschine 8 und ihr Greiferkopf 1 sind durch strichpunktierte Linien angedeutet. Mit der Packmaschine 8 können z.B. Flaschen von einem Transportband in einen Trägerkasten gesetzt oder von einem Trägerkasten entnommen werden. Für das Greifen und Bewegen der Flaschen weist die Packmaschine 8 mindestens einen Greiferkopf 1 auf, der eine nicht näher dargestellte Kopfplatte aufweist, welche mehrere Greifer 2 trägt. Jeder Greifer 2 besteht aus einem an der Kopfplatte befestigten Haltestiel 10 und einem am unteren Ende des Haltestiels befestigten, beispielsweise glockenförmigen Greiferelement 11. Innerhalb des Greiferelements 11 befindet sich ein mit Druckluft beaufschlagter elastischer Greifereinsatz oder durckluftbetätigte Greiferbacken oder Greiffinger. Um einen Flaschenhals von außen her zu umschließen, wird der Flaschenhals durch Absenken des Greiferkopfes 1 in das Greiferelement 11 eingeführt.

Mit der erfindungsgemäßen Reinigungsvorrichtung können alle Greifer 2 des Greiferkopfes 1 insbesondere im Bereich der Greiferelemente 11 gleichzeitig und gründlich gereinigt werden. Die Reinigungsvorrichtung besteht im wesentlichen aus einer Wanne 3, die mit einer Flüssigkeit wie z.B. Wasser gefüllt wird, und in welche alle Greifer 2 gleichzeitig eingetaucht werden können. Der Flüssigkeit können bestimmte Reinigungsmittel zugesetzt werden. Durch eine Düseneinrichtung 5 am Boden der Wanne 3 können nach oben gerichtete Wasserstrahlen ausgestoßen werden, welche die möglicherweise innerhalb der Greiferelemente 11 vorhandene Luft verdrängen. Hierdurch wird eine komplette Benetzung der Innenoberfläche der Greiferelemente 11 erzielt. Ferner ist zur Unterstützung des Reinigungsvorganges eine Ultraschalleinrichtung 4 in der Wanne 3 angeordnet, mit welcher die Greifer 2 durch Ultraschall bestrahlt und gereinigt werden können.

Die Wanne 3 mit der Ultraschalleinrichtung 4 und der Düseneinrichtung 5 ist bei der Ausführungsform gemäß Figur 1 am Ende eines Hubwerkes 6 angeordnet. Das Hubwerk 6 ist Teil einer Halterung, die ein auf Rollen angeordnetes fahrbares Gestell 9 und eine am Gestell senkrecht nach oben stehend angeordnete Strebe 7 enthält. Ober entsprechende Führungen kann das Hubwerk 6 entlang der Strebe 7 in vertikaler Richtung verfahren werden. Weiterhin kann das Grundgestell 9 durch die Rollen in seitlicher Richtung bewegt werden, so dass die Halterung insgesamt eine beliebige räumliche Positionierung der Wanne 3 erlaubt.

Mit der erfindungsgemäßen Reinigungsvorrichtung kann die Reinigung der Greifer 2 schnell, einfach und sehr sauber durchgeführt werden. Lange Stillstandszeiten der Packmaschine 8 werden vermieden. Weiterhin kann durch Einsatz der Reinigungsvorrichtung das Ausbauen der Greifer 2 für den Reinigungsvorgang vermieden werden, da sich durch den Einsatz von Ultraschall eine sehr gründliche Reinigung auch für fest anhaftende Schmutzreste erzielen lässt.

Bei dem in Figur 1 dargestellten Ausführungsbeispiel lässt sich die auf der Halterung angeordnete Reinigungsvorrichtung mittels der Halterung beliebig positionieren und somit manuell an den zu reinigenden Greiferkopf 1 heranführen. Darüber hinaus ist es auch möglich, die Reinigungsvorrichtung in die Packmaschine 8 zu integrieren, um somit eine vollautomatische Reinigung zu ermöglichen.

Bei dem in Figur 2 dargestellten Ausführungsbeispiel wird die Wanne 3 nicht von einem Wagen mit einem Hubwerk 6 gehalten, sondern läuft auf einem Schienensystem, das in die Packmaschine 8 integriert ist. Dieses Schienensystem ist unterhalb der Verfahrwege der Greiferköpfe 1 positioniert und weist zwei parallele Längsträger 12 auf, an denen Schienen 13 mit rechteckigem Querschnitt befestigt sind. Am Boden der Wanne 3 sind Rollen 14 drehbar gelagert, die auf den Schienen 13 aufsitzen und die Wanne 3 tragen. Auf den Schienen 13 kann die Reinigungsvorrichtung im Bedarfsfall unter den Greiferkopf 1 gefahren werden. Der Reinigungsvorgang selbst erfolgt wie beim Ausführungsbeispiel gemäß Figur 1.

Beim manuellen Einsatz der Reinigungsvorrichtung gemäß Figur 1 wird der Hubwagen 9 mit der Reinigungsvorrichtung an die Packmaschine 8 herangefahren und die Wanne 3 unter einem Greiferkopf 1 positioniert. Anschließend kann die Wanne 3 nach oben gefahren werden, so dass die Greifer 2 in die in der Wanne befindliche Flüssigkeit eintauchen. Durch Aktivieren der Düseneinrichtung 5 bzw. des Düsenstocks werden alle eventuell vorhandenen Hohlräume der Greifer 2 mit Flüssigkeit gefüllt und somit alle zu säubernden Oberflächen benetzt. Entweder daran anschließend oder gleichzeitig kann die Beschallung mit Ultraschall erfolgen. Hierdurch setzt der hauptsächliche Reinigungsvorgang ein. Nach Beendigung der Reinigung mit Ultraschall wird die Wanne 3 abgesenkt und der Reinigungsvorgang wird gegebenenfalls beim nächsten Greiferkopf 1 wiederholt.

Bei Verwendung einer in die Packmaschine 8 integrierten Reinigungsvorrichtung (nicht dargestellt) fährt die mit Wasser gefüllte Wanne bei Beginn des Reinigungsvorganges automatisch in die Packmaschine ein. Dann taucht ein erster Greiferkopf 1 in die Wanne ein, so dass seine Greifer 2 mit Reinigungsflüssigkeit bedeckt sind. Durch die Düseneinrichtung am Boden der Wanne wird anschließend die eventuell vorhandene Luft aus dem Inneren der Greiferelemente 11 herausgespült und eine komplette Benetzung auch der Innenoberfläche erzielt. Durch die nachfolgende Aktivierung der Ultraschalleinrichtung findet dann eine gründliche Reinigung der Greifer 2 statt. Nach dem Reinigungszyklus fährt der Greiferkopf 1 aus der Wanne 3 heraus, die Wanne 3 wird unter dem nächsten Greiferkopf 1 positioniert und dieser taucht in die Wanne 3 ein, womit der nächste Reinigungszyklus beginnt. Die Steuerung der Bewegung und die Betätigung der Reinigungsvorrichtung kann in diesem Falle auch in die Steuerung der Packmaschine 8 integriert sein.

Bei Robotern, die ebenfalls zum Ein- bzw. Auspacken von Flaschen oder ähnlichen Behältern verwendet werden, ist es auch denkbar, eine separat stehende Reinigungsstation aufzustellen. Diese Reinigungsstation besteht aus der Wanne 3, die beispielsweise die Größe der aneinander montierten Greiferköpfe 1 hat und somit alle Greiferköpfe in einem Reinigungsvorgang reinigen kann.

Der Roboter fährt hierzu nach Ablauf vorgegebener Zykluszeiten oder nach Betätigung des Reinigungswahlschalters diese Wanne 3 an, senkt die Greiferköpfe 1 ab und der Reinigungsvorgang läuft wie beschrieben ab.

Die Wanne 3 kann bei allen Ausführungsformen auch derart dimensioniert sein, dass zwei oder mehr nebeneinander angeordnete Greiferköpfe 1 mit den dazugehörigen Greifern 2 gleichzeitig in die Wanne 3 eingetaucht und gereinigt werden können.

## Patentansprüche

1. Reinigungsvorrichtung für Greifer (2) von Packmaschinen (8), enthaltend eine mit Flüssigkeit befüllbare Wanne (3), in welche die an einem Greiferkopf (1) befestigten Greifer (2) eingetaucht werden können, mindestens eine in der Wanne (3) angeordnete Ultraschallquelle (4) zum Reinigen der Greifer (2) mittels Ultraschall, **dadurch gekennzeichnet, daß** die Reinigungsvorrichtung eine in der Wanne (3) angeordnete Düseneinrichtung (5) zum Benetzen der Oberflächen der Greifer (2) mit der Flüssigkeit enthält.

2. Reinigungsvorrichtung nach Anspruch 1, **dadurch gekennzeichnet, dass** die Wanne (3) so dimensioniert ist, dass alle Greifer (2) mindestens eines Greiferkopfes (1) gleichzeitig in die Wanne eingetaucht werden können.

3. Reinigungsvorrichtung nach einem der Ansprüche 1 oder 2, **dadurch gekennzeichnet, dass** die Düseneinrichtung (5) mehrere Düsen umfasst, die matrixartig angeordnet sind.

4. Reinigungsvorrichtung nach einem der vorhergehenden Ansprüche, **dadurch gekennzeichnet, dass** die Düseneinrichtung (5) mehrere Düsen umfasst, die in einem der Anordnung der zu reinigenden Greifer (2) entsprechenden Raster angeordnet sind.

5. Reinigungsvorrichtung nach einem der vorhergehenden Ansprüche, **dadurch gekennzeichnet, dass** die Ansaugung der Druckzuleitung für die Düseneinrichtung (5) in der Wanne (3) angeordnet ist.

6. Reinigungsvorrichtung nach einem der vorhergehenden Ansprüche, **dadurch gekennzeichnet, dass** sie auf einer höhenverstellbaren und vorzugsweise seitenverstellbaren Halterung (6, 7, 9) angeordnet ist.

7. Reinigungsvorrichtung nach einem der vorhergehenden Ansprüche, **dadurch gekennzeichnet, dass** sie eine Steuerung für die Düseneinrichtung (5) und Ultraschallquelle (4) enthält, welche so eingerichtet ist, dass sie einen automatischen Reinigungsprozess ausführen lassen kann.

8. Reinigungsvorrichtung nach Anspruch 7, **dadurch gekennzeichnet, dass** die Steuerung der Reinigungsvorrichtung an die Steuerung einer Packmaschine (8) mit zu reinigenden Greifern (2) gekoppelt ist.

9. Verfahren zur Reinigung von Greifern (2) einer Packmaschine (8), **dadurch gekennzeichnet, dass** die Greifer (2) in eine Flüssigkeit eingetaucht, unter Verdrängung gegebenenfalls vorhandener Gasblasen durch eine Düseneinrichtung (5) mit Flüssigkeit angeströmt und mit Ultraschall bestrahlt werden.

10. Verfahren nach Anspruch 9, **dadurch gekennzeichnet, dass** alle Greifer (2) eines Greiferkopfes (1) gleichzeitig in die Flüssigkeit eingetaucht und gereinigt werden.

## Claims

1. Apparatus for cleaning grippers (2) of packing machines (8), containing a liquid-fillable trough (3) in which the grippers (2), which are fastened on a gripper head (1), can be immersed, and also containing at least one ultrasound source (4) which is arranged in the trough (3) and is intended for cleaning the grippers (2) by means of ultrasound, **characterized in that** the cleaning apparatus contains a nozzle arrangement (5) which is arranged in the trough (3) and is intended for wetting the surface of the grippers (2) with the liquid.

2. Cleaning apparatus according to Claim 1, **characterized in that** the trough (3) is dimensioned such that all the grippers (2) of at least one gripper head (1) can be immersed in the trough at the same time.

3. Cleaning apparatus according to either of Claims 1 and 2, **characterized in that** the nozzle arrangement (5) comprises a plurality of nozzles arranged in a matrix-like manner.

4. Cleaning apparatus according to one of the preceding claims, **characterized in that** the nozzle arrangement (5) comprises a plurality of nozzles arranged in a grid pattern corresponding to the grippers (2) which are to be cleaned.

5. Cleaning apparatus according to one of the preceding claims, **characterized in that** the intake of the pressure feed line for the nozzle arrangement (5) is arranged in the trough (3).

6. Cleaning apparatus according to one of the preceding claims, **characterized in that** it is arranged on a vertically adjustable and preferably laterally adjustable mount (6, 7, 9).

7. Cleaning apparatus according to one of the preceding claims, **characterized in that** it contains a control means for the nozzle arrangement (5) and ultrasound source (4), the control means being set up such that it can allow an automatic cleaning process to be carried out.

8. Cleaning apparatus according to Claim 7, **characterized in that** the control means of the cleaning apparatus is coupled to the control means of a packing machine (8) with grippers (2) which are to be cleaned.

9. Process for cleaning grippers (2) of a packing machine (8), **characterized in that** the grippers (2) are immersed in a liquid, with any gas bubbles which may be present being displaced in the process, are flushed with liquid by a nozzle arrangement (5) and are irradiated with ultrasound.

10. Process according to Claim 9, **characterized in that** all the grippers (2) of a gripper head (1) are simultaneously immersed in the liquid and cleaned.

## Revendications

1. Dispositif de nettoyage pour des préhenseurs (2) de machines d'emballage (8), comportant une cuve (3) susceptible d'être remplie de liquide dans laquelle peuvent venir plonger les préhenseurs (2) fixés sur une tête de préhension (1), au moins une source à ultrasons (4) agencée dans la cuve (3) et destinée à nettoyer les préhenseurs (2) au moyen d'ultrasons, **caractérisé en ce que** le dispositif de nettoyage comprend un système à buses (5) agencé dans la cuve (3) et destiné à mouiller les surfaces des préhenseurs (2) avec le liquide.

2. Dispositif de nettoyage selon la revendication 1, **caractérisé en ce que** la cuve (3) est dimensionnée de telle sorte que tous les préhenseurs (2) d'au moins une tête de préhension (1) peuvent être plongés simultanément dans la cuve.

3. Dispositif de nettoyage selon l'une ou l'autre des revendications 1 et 2, **caractérisé en ce que** le système à buses (5) comprend plusieurs buses qui sont agencées en forme de matrice.

4. Dispositif de nettoyage selon l'une des revendications précédentes, **caractérisé en ce que** le système à buses (5) comprend plusieurs buses qui sont agencées dans une trame correspondant à l'agencement des préhenseurs à nettoyer (2).

5. Dispositif de nettoyage selon l'une des revendications précédentes, **caractérisé en ce que** le moyen d'aspiration de la conduite d'alimentation sous pression pour le système à buses (5) est agencé dans la cuve (3).

6. Dispositif de nettoyage selon l'une des revendications précédentes, **caractérisé en ce qu'**il est agencé sur une monture (6, 7, 9) réglable en hauteur et de préférence réglable latéralement.

7. Dispositif de nettoyage selon l'une des revendications précédentes, **caractérisé en ce qu'**il comprend une commande pour le système à buses (5) et pour la source à ultrasons (4), qui est conçue de manière à pouvoir faire exécuter un processus de nettoyage automatique.

8. Dispositif de nettoyage selon la revendication 7, **caractérisé en ce que** la commande du dispositif de nettoyage est couplée à la commande d'une machine d'emballage (8) présentant des préhenseurs à nettoyer (2).

9. Procédé pour nettoyer des préhenseurs (2) d'une machine d'emballage (8), **caractérisé en ce que** l'on fait plonger les préhenseurs (2) dans un liquide, **en ce qu'**ils sont attaqués par le liquide au moyen d'un système à buses (5) en chassant des bulles de gaz éventuellement présentes, et **en ce qu'**ils sont irradiés par des ultrasons.

10. Procédé selon la revendication 9, **caractérisé en ce que** l'on fait plonger dans le liquide et on nettoie simultanément tous les préhenseurs (2) d'une tête de préhension (1).
